# EUROPEAN PATENT APPLICATION

(11) **EP 4 768 207 A1**
(43) Date of publication of application: **01.07.2026**
(21) Application number: 25752345.6
(22) Date of filing: 05.02.2025
(51) Int. Cl.: B26D 7/26, B26D 1/15, H01M 4/04, H01M 10/04, B26D 7/00, B26D 7/20

(54) **ELECTRODE TRIMMING DEVICE**

(30) Priority: 08.02.2024 KR 20240019966
(71) Applicant: LG Energy Solution, Ltd., Seoul 07335 (KR)
(72) Inventor: CHA, Myeong Geun, Daejeon 34122 (KR); LIM, Dong Hun, Daejeon 34122 (KR); CHO, Won Hak, Daejeon 34122 (KR)
(74) Representative: Goddar, Heinz J.
(86) International application number: PCT/KR2025/001668
(87) International publication number: WO 2025/170300

(57) **Abstract**

The present disclosure relates to an electrode trimming device, and the electrode trimming device according to the present disclosure includes a trimming knife positioned on the opposite side of a transfer roller that transfers an electrode sheet based on the electrode sheet and performing a trimming process of removing unnecessary portions of edges of the electrode sheet; a support portion that supports the trimming knife; and a stopper unit that is supported by the support portion and allows the trimming knife to be spaced apart from the transfer roller by a certain distance to prevent the trimming knife from directly contacting the transfer roller.

## Description

### TECHNICAL FIELD

### CROSS-REFERENCE TO RELATED APPLICATIONS

The present application is based on and claims priority from Korean Patent Application No. 10-2024-0019966, filed on February 8, 2024, with the Korean Intellectual Property Office, the disclosure of which is incorporated herein in its entirety by reference.

### TECHNICAL FIELD

The present disclosure relates to an electrode trimming device.

### BACKGROUND ART

Due to the rapid increase in the use of fossil fuels, there is an increasing demand for the use of alternative energy and clean energy, and as part of this, the most actively researched field is power generation and storage using electrochemistry. Currently, a typical example of an electrochemical device that utilizes such electrochemical energy may be secondary batteries.

Secondary batteries are attracting much attention as an energy source not only for mobile devices such as mobile phones, digital cameras, and laptops, but also for power devices such as electric bicycles, electric vehicles, and hybrid electric vehicles.

Secondary batteries are classified into coin-type batteries, cylindrical batteries, prismatic batteries, and pouch-type batteries depending on the shape of a battery case. In secondary batteries, an electrode assembly mounted inside the battery case is a power generating element that can be charged and discharged with a stacked structure of electrodes and separators.

The electrode assembly may be roughly classified into a jelly-roll type in which a sheet-like positive electrode and negative electrode coated with an active material having a separator interposed therebetween are wound, a stack type in which unit cells where at least one electrode and at least one separator are stacked are sequentially stacked, and a stack/folding type in which the unit cells are wound with a long separation film.

An electrode is usually made by stacking an electrode active material layer formed by binding an electrode active material and a conductive material used as needed with a binder on a current collector. In the electrodes, there is a coated electrode manufactured by applying a slurry for coated electrodes including an electrode active material, a binder, a conductive material, and the like on a current collector, and removing the solvent by heat or the like.

In these methods, energy is required to dry the polymer film or remove the solvent from the slurry for coated electrodes, which increases the cost and makes it difficult to improve productivity.

Therefore, a method for manufacturing an electrode in a dry manner without using a slurry for coated electrodes has been proposed. This is known as a technology for producing electrodes using a film made by mixing an electrode active material, a binder, and a conductive material without a liquid medium such as a solvent or dispersion medium, and then passing the powder mixture through a rolling roll.

In the case of a conventional dry electrode edge trimming unit, trimming was performed on the roll path using both upper and lower parts. Then, when producing a dry electrode sheet through a continuous calendaring process, trimming was performed on the rolling roll. At this time, there is a problem of damage to the rolling roll due to the trimming knife.

### SUMMARY

### TECHNICAL PROBLEM

One aspect of the present disclosure is to provide an electrode trimming device capable of preventing damage to a roller when trimming an electrode positioned on an outer surface of the roller.

### TECHNICAL SOLUTION

An electrode trimming device according to an embodiment of the present disclosure includes a trimming knife positioned on the opposite side of a transfer roller that transfers an electrode sheet based on the electrode sheet and performing a trimming process of removing unnecessary portions of edges of the electrode sheet; a support portion that supports the trimming knife; and a stopper unit that is supported by the support portion and allows the trimming knife to be spaced apart from the transfer roller by a certain distance to prevent the trimming knife from directly contacting the transfer roller.

### ADVANTAGEOUS EFFECTS

According to the present disclosure, a stopper unit is provided to prevent a trimming knife positioned on the opposite side of a transfer roller that transfers an electrode sheet based on the electrode sheet and removing unnecessary portions of edges of the electrode sheet through the trimming knife, from directly contacting the transfer roller, which may prevent damage to the transfer roller by the trimming knife.

### BRIEF DESCRIPTION OF THE DRAWINGS

FIG. 1 is a view showing a state of use of an electrode trimming device according to an embodiment of the present disclosure.
FIG. 2 is a side view showing the concept of an electrode trimming device according to an embodiment of the present disclosure.
FIG. 3 is a cross-sectional view of an electrode trimming device according to an embodiment of the present disclosure, viewed from the front.
FIG. 4 is a side view showing an electrode trimming device according to an embodiment of the present disclosure.
FIG. 5 is an exploded perspective view showing a support portion in an electrode trimming device according to an embodiment of the present disclosure.

### DETAILED DESCRIPTION

The objectives, specific advantages, and novel features of the present disclosure will become more apparent from the following detailed description and preferred embodiments in connection with the accompanying drawings. It should be noted that in affixing the reference numerals to the elements in each drawing in this specification, the identical reference numerals are affixed to the identical elements as much as possible even if they are shown in different drawings. Additionally, the present disclosure may be embodied in many different forms and is not limited to the embodiments described herein. And, in describing the present disclosure, detailed descriptions of related known technologies that may unnecessarily obscure the gist of the present disclosure will be omitted.

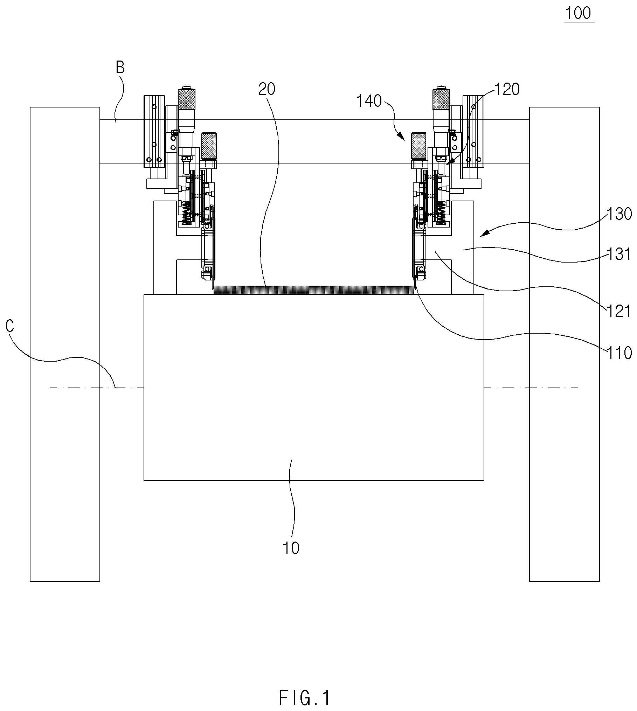

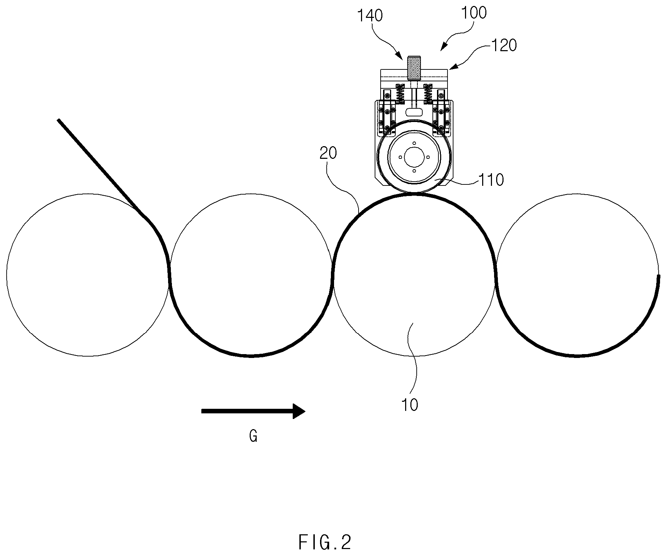

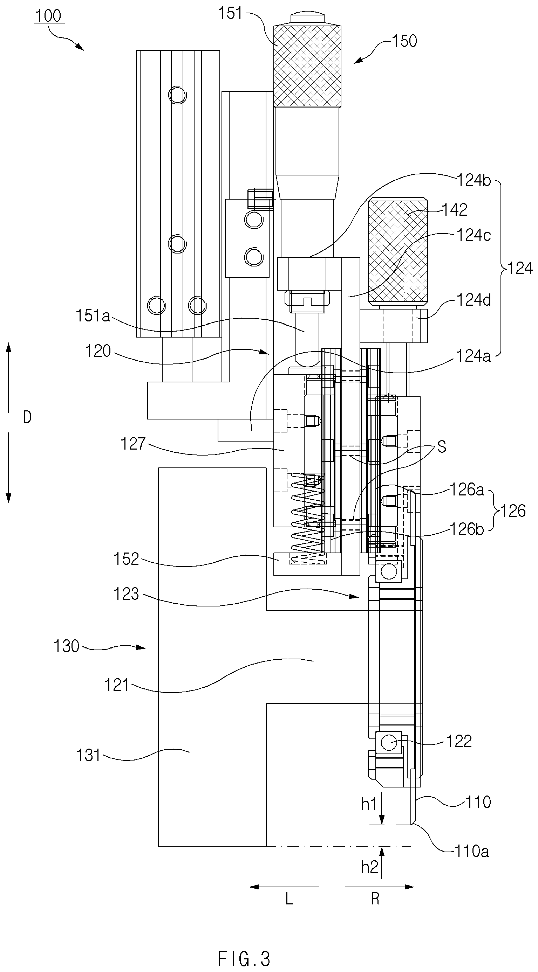

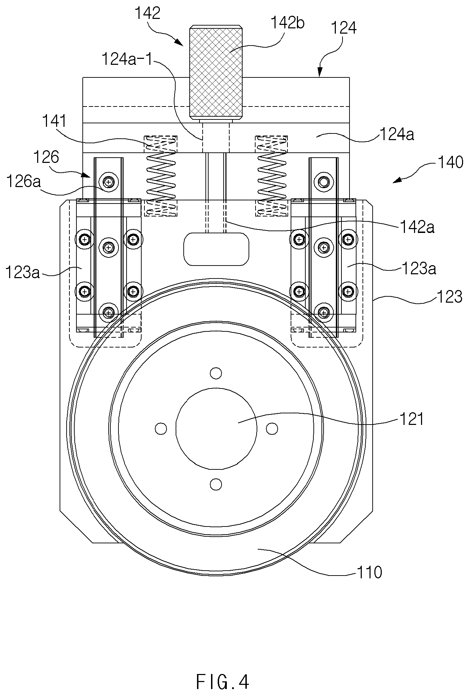

FIG. 1 is a view showing a state of use of an electrode trimming device according to an embodiment of the present disclosure, FIG. 2 is a side view showing the concept of an electrode trimming device according to an embodiment of the present disclosure, FIG. 3 is a cross-sectional view of an electrode trimming device according to an embodiment of the present disclosure, viewed from the front, and FIG. 4 is a side view showing an electrode trimming device according to an embodiment of the present disclosure.

Referring to FIGS. 1 to 4, an electrode trimming device 100 according to an embodiment of the present disclosure includes a trimming knife 110 positioned on the opposite side of a transfer roller 10 that transfers an electrode sheet 20 based on the electrode sheet 20 and performing a trimming process of removing defective portions of edges of the electrode sheet 20, a support portion 120 that supports the trimming knife 110, and a stopper unit 130 that is supported by the support portion 120 and allows the trimming knife 110 to be spaced apart from the transfer roller 10 by a certain distance to prevent the trimming knife 110 from directly contacting the transfer roller 10.

Meanwhile, the electrode trimming device 100 according to an embodiment of the present disclosure may further include a contact force adjustment unit and a knife height adjustment unit 150.

More specifically, the trimming knife 110 is positioned on the opposite side of the roller that transfers the electrode sheet 20 based on the electrode sheet 20 and performs a trimming process of removing unnecessary portions of the edges of the electrode sheet 20.

Additionally, the trimming knife 110 may be positioned on both edge portions of the electrode sheet 20 in the width direction, respectively. Here, the width direction may be, for example, a direction perpendicular to the direction of travel G.

In addition, the trimming knife 110 may be formed in a disk shape, for example, and may have a knife blade formed along the outer circumferential surface.

The electrode sheet 20 may include a film made of a mixture in which an electrode active material, a conductive material, and a binder are dry-mixed.

The transfer roller 10 may include, for example, multiple rolling rolls that roll and move the electrode sheet 20. At this time, for example, if the transfer rollers 10 are arranged in multiple pieces, the electrode sheet 20 may be moved and rolled while alternately contacting the upper and lower parts of the multiple transfer rollers 10.

The support portion 120 supports the trimming knife 110. The support portion 120 may be mounted on the support body B. The support body B may be configured in a column shape.

Additionally, the support portion 120 may include a rotation shaft 121 provided at a lower side in a direction parallel to a central axis C of the transfer roller 10.

Meanwhile, the support portion 120 may further include a bearing 122 provided at a lower side. At this time, the rotation shaft 121 may be mounted on the bearing 122. Here, the stopper roller 131 and the trimming knife 110 may be mounted on the rotation shaft 121 and rotated. And, the rotation shaft 121 of the stopper roller 131 and the trimming knife 110 may be in a direction parallel to the central axis C of the transfer roller 10.

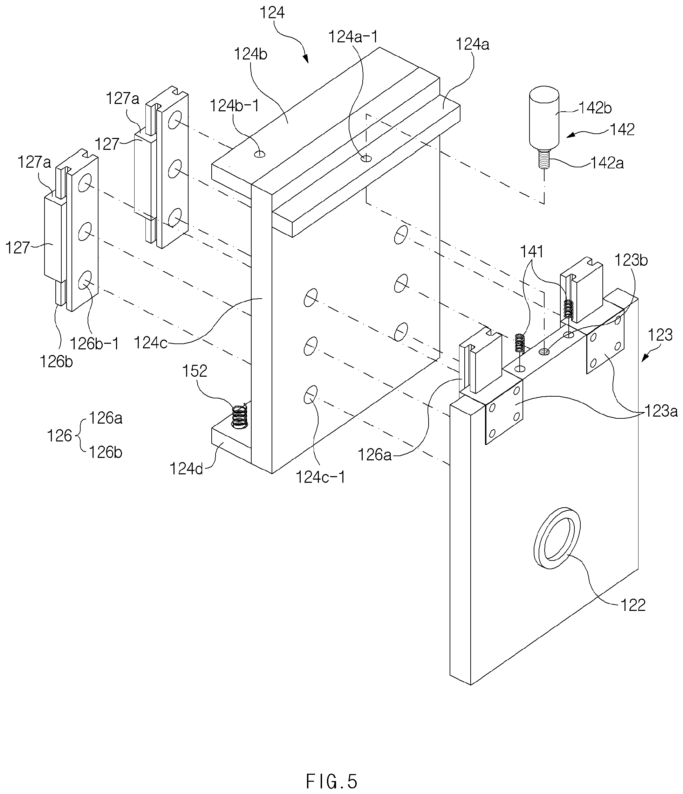

FIG. 5 is an exploded perspective view showing a support portion in an electrode trimming device according to an embodiment of the present disclosure.

Meanwhile, referring to FIGS. 3 to 5, the support portion 120 may further include a mounting block 123 on which the rotation shaft 121 is mounted, and a first guide rail 126a that extends in the upper-lower direction D and to which the mounting block 123 is slidably coupled. Additionally, the support portion 120 may further include a support frame 124 having a mounting portion 124a that supports a force adjustment screw 142 protruding to one side F in the horizontal direction. At this time, the mounting portion 124a may be formed with a mounting hole 124a-1 into which the force adjustment screw 142 is inserted. In addition, the support portion 120 may further include a second guide rail 126b coupled to the support frame and a support block 127 to which the second guide rail 126b is slidably coupled.

The first guide rail 126a and the second guide rail 126b may be spaced apart from each other by a certain distance and extend side by side in the upper-lower direction. At this time, the support portion 120 may further include a guide rail 126 including the first guide rail 126a and the second guide rail 126b.

The support frame 124 may include a body 124c positioned in a lateral direction of the support block 127 and coupled to the second guide rail 126b to move in the upper-lower direction D with respect to the support block 127 together with the second guide rail 126b, an upper extension portion 124b extending from an upper portion of the body 124c to the other side L and facing an upper end 127a of the support block 127, and a lower extension portion 124d extending from a lower portion of the body 124c to the other side L and facing a lower end of the support block 127.

The body 124c of the support frame 124 may be positioned between the first guide rail 126a and the second guide rail 126b and coupled to the first guide rail 126a and the second guide rail 126b. At this time, the first guide rail 126a and the second guide rail 126b may be mutually fixed through the coupling screw S coupled to the coupling holes 124-1, 126b-1 formed in each of the first guide rail 126a, the body, and the second guide rail 126b.

The support block 127 may be fixed in position. At this time, the support block 127 may be fixed to the support body B. That is, the support block 127 is fixed to the support body B, so that the support block 127 may provide a reference position.

Additionally, the support block 127 may be coupled to the first guide rail 126a. Here, the first guide rail 126a may be moved up and down based on the support block 127. At this time, the first guide rail 126a and the support block 127 may be configured in the form of, for example, an LM guide. That is, first guide grooves extending upward along the first guide rail 126a are formed on both sides, and the coupling portions provided on both sides of the support block 127 may be coupled to the first guide grooves formed on both sides of the first guide rail 126a.

The mounting block 123 may include a guide portion 123a slidably coupled to the second guide rail 126b. At this time, the guide portion 123a is provided as a guide block and may be moved up and down while receiving the guide of the second guide rail 126b. And, the guide portions may be provided on both upper sides of the mounting block 123, respectively.

Here, the second guide rail 126b and the guide portion 123a may be configured in the form of, for example, an LM guide. That is, second guide grooves extending upward along the second guide rail 126b are formed on both sides, and the coupling portions provided on both sides of the guide portion 123a may be coupled to the second guide grooves formed on both sides of the second guide rail 126b.

The stopper unit 130 is supported by the support portion 120 and allows the trimming knife 110 to be spaced apart from the transfer roller 10 by a certain distance to prevent the trimming knife 110 from directly contacting the transfer roller 10.

Additionally, the stopper unit 130 may include a stopper roller 131 in contact with the transfer roller 10.

Meanwhile, the bottom height h2 of the stopper roller 131 may be positioned lower than the bottom height h1 of the trimming knife 110. Here, for example, the bottom height h2 of the stopper roller 131 may be positioned 10 to 20 µm lower than the bottom height h1 of the trimming knife 110. Therefore, the bottom height h2 of the stopper roller 131 may be positioned lower than the bottom height h1 of the trimming knife 110 by 10 µm at the lower limit or more, so that the outer surface of the transfer roller 10 may be prevented from being damaged by the trimming knife 110. In addition, the bottom height h2 of the stopper roller 131 may be positioned lower than the bottom height h1 of the trimming knife 110 by 20 µm at the upper limit or less, so that defective portions of the edges of the electrode sheet 20 may be cut by the trimming knife 110.

Additionally, the stopper roller 131 is in contact with the transfer roller 10 and may be rotated through friction with the transfer roller 10 upon rotation of the transfer roller 10.

At this time, the trimming knife 110 may be rotated simultaneously as the stopper roller 131 rotates and remove unnecessary portions from the electrode sheet 20. And, the electrode sheet 20 moves in contact with the center of the outer circumferential surface of the transfer roller 10 in the direction of travel G of the electrode sheet 20, for example, and the stopper roller 131 is provided in a pair and may be rotated in contact with both sides of the outer circumferential surface of the transfer roller 10 in the direction of travel G of the electrode sheet 20. Here, the outer circumferential surface of the stopper roller 131 is not in contact with the electrode sheet 20 but is in contact with the outer circumferential surface of the transfer roller 10, and the trimming knife 110 may contact unnecessary portions of the electrode sheet 20 and perform a trimming process of removing unnecessary portions.

The contact force adjustment unit 140 may adjust the force with which the stopper roller 131 contacts the transfer roller 10.

The contact force adjustment unit 140 may include an elastic member 141 elastically supporting the upper side of the mounting block 123. The elastic member 141 may be mounted between the upper side of the mounting block 123 and the lower side of the mounting portion 124a.

Additionally, the contact force adjustment unit 140 may further include a force adjustment screw 142 whose lower part is screwed to the upper side of the mounting block 123. When the force adjustment screw 142 rotates, the mounting block 123 moves up and down to adjust the elastic force of the elastic member 141. At this time, the elastic member 141 may be composed of a coil spring and may be positioned on both sides of the force adjustment screw 142.

The force adjustment screw 142 may include a screw portion 142a coupled to the mounting block 123 and a head portion 142b formed with a width larger than a diameter of the mounting hole 124a-1 and positioned above the mounting portion 124a of the support frame 124. The screw portion 142a may be formed along the lower outer circumferential surface of the force adjustment screw 142. And, the screw portion 142a may be screwed to the screw hole 123b formed at the upper end of the mounting block 123.

In describing the operation of the contact force adjustment unit 140, when the force adjustment screw 142 is rotated in one direction to narrow the gap between the mounting portion 124a and the mounting block 123, the elastic member 141 may contract to provide an increased elastic force to the stopper roller 131. On the other hand, when the force adjustment screw 142 is rotated in the other direction to widen the gap between the mounting portion 124a and the mounting block 123, the elastic member 141 may be stretched to provide a reduced elastic force to the stopper roller 131.

The knife height adjustment unit 150 may adjust the height of the trimming knife 110.

Additionally, the knife height adjustment unit 150 may include a position adjustment screw 151 coupled to the upper extension portion 124b of the support frame 124 and having a lower end portion 151a contacting an upper end 127a of the support block 127. Here, when the position adjustment screw 151 is rotated, the lower end portion 151a may press the upper side of the support block 127 and move the support frame 124 in the upper-lower direction D to adjust the height of the trimming knife 110.

The position adjustment screw 151 may include a support body 151d coupled to the upper extension portion 124b of the support frame 124, and a screw rod 151c screwed to an inner circumferential surface of the support body 151d.

The lower end portion 151a of the position adjustment screw 151 is positioned at a lower end of the screw rod 151c, and when the screw rod 151c is rotated, the screw rod 151c may be moved in the upper-lower direction based on the support body 151d. Here, an adjustment portion 151b protruding toward the upper side of the support body 151d is formed on the upper side of the screw rod 151c, so that the screw rod 151c may be rotated by rotating the adjustment portion 151b. At this time, the screw rod 151c may pass through a through hole 124b-1 formed in the upper extension portion 124b in an upward direction.

In describing the operation of the knife height adjustment unit 150, when the screw rod 151c of the position adjustment screw 151 is rotated in one direction, the screw rod 151c is moved in a downward direction with respect to the support body 151d and presses the upper end 127a of the support block 127. At this time, the position of the support block 127 is fixed, so that the support frame 124 to which the support body 151d is fixed may be moved upward together with the support body 151d according to the rotation of the screw rod 151c in the one direction. Accordingly, the trimming knife 110 positioned at the end of the support portion 120 may be moved in an upward direction. Then, when the screw rod 151c of the position adjustment screw 151 is rotated in the other direction, the screw rod 151c is moved in an upward direction with respect to the support body 151d and releases the pressure on the upper end 127a of the support block 127. At this time, the position of the support block 127 is fixed, so that the support frame 124 to which the support body 151d is fixed may be moved downward together with the support body 151d according to the rotation of the screw rod 151c in the other direction. Accordingly, the trimming knife 110 positioned at the end of the support portion 120 may be moved in a downward direction.

Meanwhile, the knife height adjustment unit 150 may include, for example, a micrometer configuration having a resolution of 1 um to finely adjust the height of the trimming knife 110. At this time, for example, the position adjustment screw 151 and the support frame 124 may have a micrometer configuration.

Meanwhile, the knife height adjustment unit 150 may further include a spring 152 positioned between the lower end of the support block 127 and the lower extension portion 124d of the support frame 124. At this time, the spring 152 may be provided as, for example, a coil spring to provide restoring force.

Referring to FIGS. 1 to 4, in the electrode trimming device 100 according to an embodiment of the present disclosure configured as described above, the stopper unit 130 is provided to prevent the trimming knife 110 positioned on the opposite side of the transfer roller 10 that transfers the electrode sheet 20 based on the electrode sheet 20 and removing unnecessary portions of edges of the electrode sheet 20 through the trimming knife 110, from directly contacting the transfer roller 10, which may prevent damage to the transfer roller 10 by the trimming knife 110.

The present disclosure has been hereinabove described in detail through specific embodiments, but this is intended to specifically describe the present disclosure, and the present disclosure is not limited thereto. It will be said that various modifications and variations are possible by those having ordinary skill in the art within the technical ideas of the present disclosure.

Additionally, the specific scope of protection of the present disclosure will be made clear by the appended claims of the patent.

### [List of Reference Numerals]

10: Transfer roller
20: Electrode sheet
100: Electrode trimming device
110: Trimming knife
120: Support portion
121: Rotation shaft
122: Bearing
123: Mounting block
123a: Guide portion
124: Support frame
124a: Mounting portion
124a-1: Through hole
124b: Upper extension portion
124b-1: Coupling hole
124c: Body
124d: Lower extension portion
126: Guide rail
126a: First guide rail
126b: Second guide rail
127: Support block
130: Stopper unit
131: Stopper roller
140: Contact force adjustment unit
141: Elastic member
142: Force adjustment screw
142a: Screw portion
142b: Head portion
150: Knife height adjustment unit
151: Position adjustment screw
151a: Lower end portion
151b: Adjustment portion
151c: Screw rod
151d: Support body
152: Spring

## Claims

1. An electrode trimming device, comprising:
a trimming knife positioned on the opposite side of a transfer roller that transfers an electrode sheet based on the electrode sheet and performing a trimming process of removing unnecessary portions of edges of the electrode sheet;
a support portion that supports the trimming knife; and
a stopper unit that is supported by the support portion and allows the trimming knife to be spaced apart from the transfer roller by a certain distance to prevent the trimming knife from directly contacting the transfer roller.

2. The electrode trimming device according to claim 1,
wherein the stopper unit comprises a stopper roller in contact with the transfer roller.

3. The electrode trimming device according to claim 2,
wherein the stopper roller is in contact with the transfer roller and rotated through friction with the transfer roller upon rotation of the transfer roller.

4. The electrode trimming device according to claim 2,
wherein the support portion comprises:
a rotation shaft provided at a lower side in a direction parallel to a central axis of the transfer roller, and
the stopper roller and the trimming knife are mounted on the rotation shaft and rotated.

5. The electrode trimming device according to claim 4,
wherein the support portion further comprises a bearing provided at a lower side, and
the rotation shaft is mounted on the bearing.

6. The electrode trimming device according to claim 2,
wherein the bottom height of the stopper roller is positioned lower than the bottom height of the trimming knife.

7. The electrode trimming device according to claim 6,
wherein the bottom height of the stopper roller is positioned 10 to 20 µm lower than the bottom height of the trimming knife.

8. The electrode trimming device according to claim 4, further comprising:
a contact force adjustment unit that adjusts the force with which the stopper roller contacts the transfer roller.

9. The electrode trimming device according to claim 8,
wherein the support portion further comprises a mounting block on which the rotation shaft is mounted; and a first guide rail that extends in the upper-lower direction and to which the mounting block is slidably coupled, and
the contact force adjustment unit comprises an elastic member elastically supporting an upper side of the mounting block.

10. The electrode trimming device according to claim 9,
wherein the contact force adjustment unit further comprises a force adjustment screw whose lower part is screwed to the upper side of the mounting block,
wherein the support portion further comprises a support frame having a mounting portion that supports the force adjustment screw protruding to one side in the horizontal direction, and
the elastic member is mounted between the upper side of the mounting block and a lower side of the mounting portion, and
when the force adjustment screw rotates, the mounting block moves up and down to adjust the elastic force of the elastic member.

11. The electrode trimming device according to claim 10,
wherein the mounting portion is formed with a mounting hole into which the force adjustment screw is inserted, and
the force adjustment screw comprises:
a screw portion coupled to the mounting block; and
a head portion formed with a width larger than a diameter of the mounting hole and positioned above the mounting portion of the support frame.

12. The electrode trimming device according to claim 10,
wherein the elastic member is composed of a coil spring and is positioned on both sides of the force adjustment screw.

13. The electrode trimming device according to claim 10, further comprising:
a knife height adjustment unit that adjusts the height of the trimming knife.

14. The electrode trimming device according to claim 13,
wherein the support portion further comprises a second guide rail coupled to the support frame and a support block to which the second guide rail is slidably coupled and whose position is fixed,
wherein the support frame comprises a body positioned in a lateral direction of the support block and coupled to the second guide rail to move in the upper-lower direction with respect to the support block together with the second guide rail; an upper extension portion extending from an upper portion of the body to the other side and facing an upper end of the support block; and a lower extension portion extending from a lower portion of the body to the other side and facing a lower end of the support block,
wherein the knife height adjustment unit comprises a position adjustment screw coupled to the upper extension portion of the support frame and having a lower end portion contacting an upper end of the support block, and
when the position adjustment screw is rotated, the lower end portion presses the upper side of the support block and moves the support frame in the upper-lower direction to adjust the height of the trimming knife.

15. The electrode trimming device according to claim 14,
wherein the knife height adjustment unit further comprises a spring positioned between the lower end of the support block and the lower extension portion of the support frame.

16. The electrode trimming device according to claim 14,
wherein the body of the support frame is positioned between the first guide rail and the second guide rail and is coupled to the first guide rail and the second guide rail, and
the mounting block comprises a guide portion slidably coupled to the first guide rail.

17. The electrode trimming device according to claim 16,
wherein the first guide rail, the body, and the second guide rail are mutually fixed through a coupling screw coupled to a coupling hole formed in each of the first guide rail, the body, and the second guide rail.

18. The electrode trimming device according to claim 14,
wherein the position adjustment screw comprises:
a support body coupled to the upper extension portion of the support frame; and
a screw rod screwed to an inner circumferential surface of the support body,
wherein the lower end portion is positioned at a lower end of the screw rod, and when the screw rod is rotated, the screw rod is moved in the upper-lower direction based on the support body.

19. The electrode trimming device according to claim 1,
wherein the electrode sheet comprises a film made of a mixture in which an electrode active material, a conductive material, and a binder are dry-mixed,
the transfer roller comprises multiple rolling rolls that roll and move the electrode sheet, and
the trimming knives are positioned at both edge portions of the electrode sheet in the width direction, respectively.
